**Europäisches Patentamt**

**European Patent Office**

**Office européen des brevets**

(19)

(11) Veröffentlichungsnummer: **0 233 471**
**B1**

(12) # EUROPÄISCHE PATENTSCHRIFT

(45) Veröffentlichungstag der Patentschrift:
**13.06.90**

(51) Int. Cl.⁵: **A01F 15/14, B65H 23/04**

(21) Anmeldenummer: **87100465.1**

(22) Anmeldetag: **15.01.87**

(54) **Rollenrundballenpresse.**

(30) Priorität: **18.01.86 DE 3601361**

(43) Veröffentlichungstag der Anmeldung:
**26.08.87 Patentblatt 87/35**

(45) Bekanntmachung des Hinweises auf die Patenterteilung:
**13.06.90 Patentblatt 90/24**

(84) Benannte Vertragsstaaten:
**FR GB IT**

(56) Entgegenhaltungen:
**EP-A- 0 126 278**
**FR-A- 2 568 745**
**US-A- 3 204 842**
**US-A- 3 559 519**
**US-A- 3 948 125**

(73) Patentinhaber: **CLAAS OHG,**
**Postfach 1140 Münsterstrasse 31,**
**D-4834 Harsewinkel- 1(DE)**

(72) Erfinder: **Ackermann, Gustav, Dr.-Ing.,**
**Farwickstrasse 38, D-4834 Harsewinkel(DE)**
Erfinder: **Clostermeyer, Gerhard, Dipl.-Ing.,**
**Ellernhagen 44, D-4830 Gütersloh 12(DE)**

## Beschreibung

Die Erfindung betrifft eine Rollenrundballenpresse mit umfangsseitigen Wickelelementen zur Herstellung von Großballen aus landwirtschaftlichem Erntegut, mit einer Vorratsrolle aus Netzgewebebahn, welche in bestimmten Abständen über in etwa dem halben Umfang eines fertigen Großballens entsprechender Länge mit vollflächigem wasserundurchlässigem Material beschichtet ist, wobei von der Vorratsrolle mittels Vorzugswalzen eine zum Zwecke der Formfixierung eines fertigen Ballens entsprechende Bahnlänge abgezogen, in den Preßraum eingeführt und mittels eines in Abhängigkeit von der abgezogenen Bahnlänge antreibbaren Messers durchtrennt wird.

Bei derratigen Rollenrundballenpressen ist eine der Vorzugswalzen mit einem Zählwerk verbunden, welches in Abhängigkeit von der Umdrehungszahl der Vorzugswalzen die von letzteren abgezogene Bahnlänge ermittelt und bei Erreichen eines voreingestellten Wertes den Antrieb eines Trennmessers einschaltet, wodurch die abgezogene Bahnlänge von der Vorratsrolle abgetrennt wird. Zum einen sind derartige Zählwerke, sollten sie den rauhen Betriebsbedingungen in der Landwirtschaft auf Dauer standhalten, sehr teuer. Zum anderen kann insbesondere bei sehr trockenen oder auch sehr feuchten Erntebedingungen Schlupf zwischen den Vorzugswalzen und der Netzgewebebahn mit wirtschaftlich vertretbaren Mitteln nicht vermieden werden, so daß sich die genau vorbestimmte Netzabtrennlinie, gemessen an der erforderlichen Länge des beim Beginn des Umhüllungsvorganges vorweg in die Presse einlaufenden Netzgewebes und an den in bestimmten Abständen mit dem Netz verbundenen vollflächigen Beschichtungen verlagert, wodurch sich die Abtrennlinie so verschiebt, daß sie im Bereich der vollflächigen Beschichtung verläuft oder andererseits die beim Beginn des Umhüllvorganges vorweg einlaufende Netzlänge zu kurz oder zu lang wird.

Der vorliegenden Erfindung liegt daher die Aufgabe zugrunde, eine Rollenrundballenpresse der eingangs näher bezeichneten Art derart auszubilden, daß unter allen nur möglichen Erntebedingungen stets die zum vollständigen Umschnüren eines fertigen Ballens notwendige Bahnlänge von einer Vorratsrolle abgezogen wird und daß die Abtrennlinie stets so verläuft, daß nach jedem Abtrennvorgang eine bestimmte Netzlänge der vollflächigen Beschichtung in Laufrichtung des Umhüllmaterials vorgeordnet bleibt. Das wird erfindungsgemäß erreicht durch eine Fotozellenanordnung, die den in Zuführrichtung vorderen Rand jeder vollflächigen Netzgewebebeschichtung abtastet und hierdurch den Antrieb für das Trennmesser einschaltet, wobei der Abstand der Fotozellenanordnung zum Trennmesser dem Abstand der Netzbahnlänge vor jeder Netzgewebeschicht entspricht, die zum einwandfreien Erfassen der Bahn von dem Ballen selbst und den Wickelelementen erforderlich ist. Da während des Umwickelns eines Ballens mit einer Bahn diese einschnürt, entspricht die Breite der aufgebrachten Wickelbahn nicht mehr der Breite des Ballens selbst. Aus diesem Grund ist es empfehlenswert, daß die Netzgewebebahnbeschichtung breiter ist als die Netzgewebebahn selbst, wobei mit Vorteil die Beschichtung die Netzgewebebahn beidseitig um den selben Betrag überragt. Auf diese Weise wird gewährleistet, daß selbst bei starker Einschnürung die Beschichtung zumindest die gesamte Breite eins fertig umwickelten Ballens entspricht, ggf. den Ballen noch seitlich überragt, so daß tatsächlich das Eindringen von Feuchtigkeit von oben, beispielsweise durch Regen, in den Ballen vermieden wird.

Im folgenden soll die Erfindung anhand eines Ausführungsbeispieles und dreier dieses schematisch darstellender Figuren näher erläutert werden. Dabei zeigt:

Fig. 1 einen umwickelten Rundballen,
Fig. 2 einen Teil einer abgezogenen Bahnlänge aus stellenweise kaschiertem Netzgewebe und
Fig. 3 den oberen Teil einer Rollenrundballenpresse in der Seitenansicht.

Mit 1 sind Wickelrollen einer nicht dargestellten Rollenrundballenpresse bezeichnet, oberhalb der ein aus zwei gegeneinander beweglichen Schneiden 2 und 3 bestehendes Trennmesser 4 angeordnet ist. Diesem Trennmesser 4 vorgeordnet sind zwei Vorzugswalzen 5 und 6. Neben den Vorzugswalzen 5 und 6 ist eine Tasteinrichtung X in Form einer Fotozellenanordnung 7 vorgesehen, die beispielsweise aus einem Sender 8 und einem Empfänger 9 besteht, welche in einem Gehäuse 10 gelagert sind. Auf nicht dargestellte Weise wird der zum Trennmesser 4 gehörende Antrieb von der Fotozellenanordnung 7 jedes Mal dann eingeschaltet, sobald der vom Sender 8 auf den Empfänger gerichtete Lichtstrahl von der in Transportrichtung vorderen Kante 11 der Beschichtung 12 der Netzgewebebahn 17 unterbrochen wird. Auf diese Weise ist gewährleistet, daß von den Vorzugswalzen 5 und 6 stets die zum Umschlingen eines fertigen Ballens 13 erforderliche Bahnlange 14 aus der Vorratsrolle 18 abgezogen wird und zwar unabhängig von eventuell zwischen den Vorzugswalzen 5 und 6 einerseits und der Netzbahn 15 andererseits vorhandenem Schlupf.

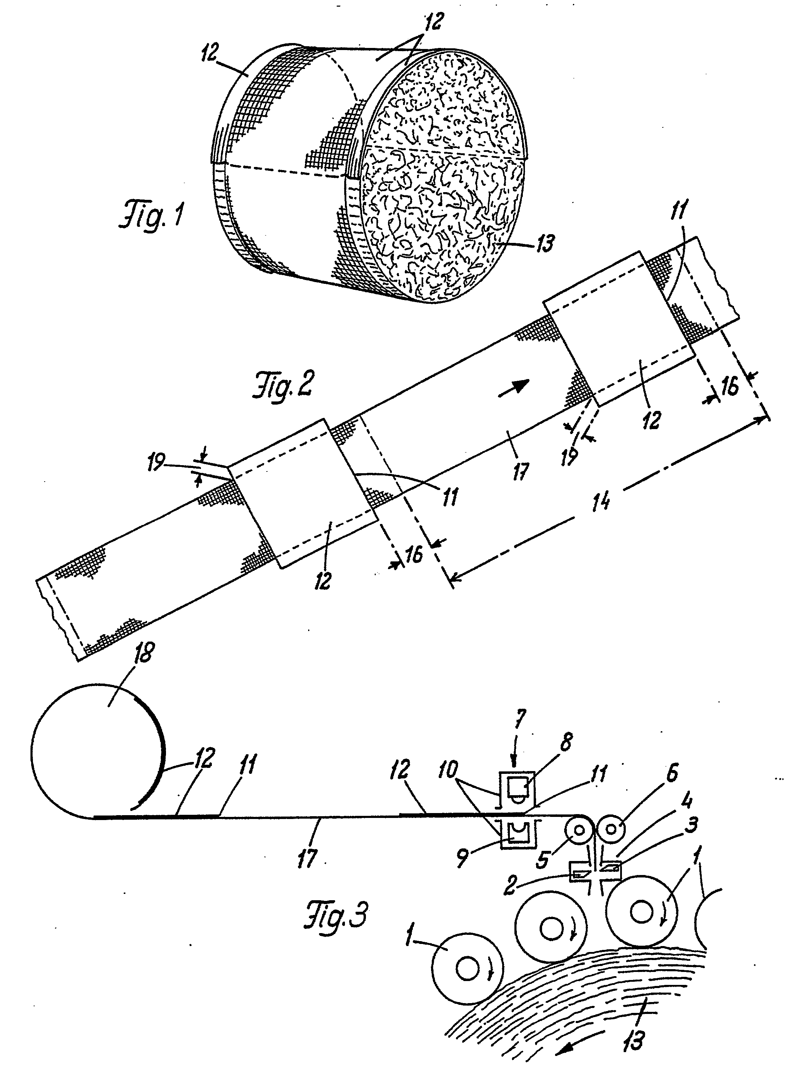

Unter anderem wird aus Fig. 3 deutlich, daß die Fotozellenanordnung 7 mit Abstand vor dem Trennmesser 4 angeordnet ist. Dieser Abstand, in der Fig. 2 mit 16 bezeichnet, stellt die unbeschichtete Netzbahnlänge dar, die erforderlich ist, damit das vordere Ende der Netzbahn 17 von den Wickelrollen 1 und dem Ballen 13 selbst ergriffen und eingezogen werden kann. Um zu erreichen, daß die Beschichtung 12 auch dann die gesamte Breite eines Ballens 13 überdeckt, wenn sich die Bahn 17 aufgrund der Bahnspannung einschnürt, überragt die Beschichtung 12, wie aus Fig. 1 und 2 zu erkennen, die Breite der Bahn 17 zu beiden Seiten um das Maß 19.

## Patentansprüche

1. Rollenrundballenpresse mit umfangsseitigen Wickelelementen zur Herstellung von Großballen aus landwirtschaftlichem Erntegut, mit einer Vorratsrolle (18) aus Netzgewebebahn (17), welche in bestimmten Abständen in etwa dem halben Umfang eines fertigen Ballens entsprechender Länge mit wasserundurchlässigem Material beschichtet ist, wobei von der Vorratsrolle (18) mittels Vorzugswalzen (5, 6) eine zum Zwecke der Formfixierung eines fertigen Ballens entsprechende Bahnlänge abgezogen, in den Preßraum eingeführt und mittels eines in Abhängigkeit von der abgezogenen Ballenlänge antreibbaren Messers (4) durchtrennt wird, gekennzeichnet durch eine Tasteranordnung (X), die den in Zuführrichtung vorderen Rand (11) jeder Netzgewebebeschichtung (12) abtastet und hierdurch den Antrieb für das Messer (4) einschaltet, wobei der Abstand der Tasteranordnung (X) zum Trennmesser (4) dem Abstand der Netzbahnlänge (16) vor jeder Netzgewebebeschichtung (12) entspricht, die zum einwandfreien Erfassen der Bahn von dem Ballen (13) selbst und den Wickelelementen (1) erforderlich ist.

2. Rollenrundballenpresse nach Anspruch 1, dadurch gekennzeichnet, daß die Tasteranordnung (X) aus einer Lichtschranke (7) besteht.

3. Rollenrundballenpresse nach Anspruch 1, dadurch gekennzeichnet, daß die Netzgewebebahnbeschichtung (12) breiter ist als die Netzgewebebahn (17) selbst.

4. Rollenrundballenpresse nach den Ansprüchen 1 und 2, dadurch gekennzeichnet, daß die Beschichtung (12) die Netzgewebebahn (17) beidseits um den selben Betrag (19) überragt.

## Claims

1. A rolled round bale press with peripheral winding elements for producing big bales of agricultural crop material, having a supply roll (18) comprising a web (17) of mesh material, which is coated with water-impervious material at certain spacings over a length corresponding to approximately half the periphery of a finished bale, wherein a length of web corresponding to the purpose of fixing the shape of a finished bale is drawn from the supply roll (18) by means of feed rollers (5, 6), introduced into the pressing chamber and severed by means of a knife (4) which can be driven in dependence on the length of web drawn off, characterised by a sensor arrangement (X) which senses the edge (11), which is the front edge in the feed direction, of each coating (12) on the mesh material and thereby switches on the drive for the knife (4), wherein the spacing of the sensor arrangement (X) relative to the severing knife (4) corresponds to the spacing of the length (16) of mesh web in front of each coating (12) on the mesh material, which is required for the web to be satisfactorily engaged by the bale (13) itself and the winding elements (1).

2. A rolled round bale press according to claim 1 characterised in that the sensor arrangement (X) comprises a light barrier means (7).

3. A rolled round bale press according to claim 1 characterised in that the coating (12) on the web of mesh material is wider than the web (17) itself.

4. A rolled round bale press according to claims 1 and 2 characterised in that the coating (12) projects beyond the web (17) of mesh material on both sides by the same amount (19).

## Revendications

1. Presse à faire des balles en rouleaux munie d'éléments d'enroulement périphériques pour la production de balles volumineuses à partir de produits de récoltes agricoles, munie d'un rouleau de réserve (18) de bande de tissu réticulé ou filet (17), lequel est revêtu, à des espacements déterminés d'une longueur correspondant sensiblement à la moitié de la circonférence d'une balle finie, d'un matériau imperméable à l'eau, moyennant quoi une longueur de filet correspondant à la fixation en forme d'une balle finie est extraite du rouleau de réserve (18) au moyen de cylindres d'avancement (5, 6), est introduite dans la zone de presse et est séparée au moyen d'une lame (4) actionnable en fonction de la longueur extraite, caractérisée par un système de contacts (X) qui détectent le bord avant (11), dans le sens d'introduction, de chaque revêtement de filet (12) et enclenche ainsi la commande de la lame (4), la distance entre le système de contacts (X) et la lame de séparation (4) correspondant à la distance de la longueur de filet (16), précédant chaque revêtement de filet (12), qui est nécessaire pour la bonne saisie du filet par la balle (13) elle-même et par les éléments d'enroulement (1).

2. Presse à faire des balles en rouleaux selon la revendication 1, caractérisée en ce que le système de contacts (X) consiste en un agencement de cellules photoélectriques (7).

3. Presse à faire des balles en rouleaux selon la revendication 1, caractérisée en ce que le revêtement de filet (12) est plus large que le filet (17) lui-même.

4. Presse à faire des balles en rouleaux selon les revendications 1 et 2, caractérisée en ce que le revêtement (12) fait une saillie de même hauteur (19) des deux côtés du filet (17).

*Fig. 1*

*Fig. 2*

*Fig. 3*